# EUROPÄISCHE PATENTSCHRIFT

(11) **EP 0 589 844 B1**
(45) Veröffentlichungstag und Bekanntmachung des Hinweises auf die Patenterteilung: **15.05.1996**
(21) Anmeldenummer: 93810665.5
(22) Anmeldetag: 21.09.1993
(51) Int. Cl.: B65G 1/04, B65G 1/06

(54) **Hochleistungs-Blocklager mit Mitteln zum Ein- und Auslagern von Lagergut**
High-performance warehouse with storing and retrieving means for goods
Magasin à haute performance avec des moyens pour stocker et prélever des marchandises

(30) Priorität: 24.09.1992 CH 2989/92
(43) Veröffentlichungstag der Anmeldung: 30.03.1994
(73) Patentinhaber: Berndt, Claus, CH-4573 Lohn (CH)
(72) Erfinder: Berndt, Claus, CH-4573 Lohn (CH); Wyrsch, Alexander, CH-4613 Rickenbach (CH)
(74) Vertreter: Fischer, Franz Joseph

(56) Entgegenhaltungen:
- EP-A- 0 133 472
- EP-A- 0 396 005
- WO-A-88/03904
- DE-A- 1 556 673
- DE-A- 2 324 858

## Beschreibung

Die Erfindung betrifft ein Hochleistungs-Block-lager mit Mitteln zum Ein- und Auslagern von Lagergut gemäss dem Oberbegriff des Patentanspruchs 1.

Derartige Blocklager sind beispielsweise als Blockhochlager bekannt. So zeigt die DE-A-38 40 648 eine derartige Einrichtung mit einer Mehrzahl von nebeneinander angeordneten Regalkanälen, die eine Lagerebene bilden. Hierbei sind mehrere derartige Ebenen übereinanderliegend angeordnet. Rechtwinklig zu den Kanälen, in welchen die einzelnen Lagereinheiten in Reihe hintereinander untergebracht sind, und in der gleichen Ebene liegend ist eine Bewegungsbahn vorgesehen, über welche die in den Kanälen gelagerten Lagereinheiten einem Aufzug zuführbar sind, bzw. vom Aufzug über die Bewegungsbahn in die entsprechenden Kanäle bringbar sind. Die einzelnen Lagereinheiten sind auf Rollpaletten untergebracht.

Mit dieser Einrichtung kann in sehr einfacher Weise das sich auf dem ersten Lagerplatz direkt neben der Bewegungsbahn befindende Stückgut entnommen werden. Wenn aber eine Einheit entnommen werden soll, die sich beispielsweise in der vierten Position in einem Kanal befindet, müssen zuerst die drei davorstehenden Lagereinheiten je einzeln weggenommen und in einem anderen Platz aufweisenden Kanal untergebracht werden, bis die Lagereinheit, die effektiv entnommen werden soll, sich in der der Bewegungsbahn benachbarten Position befindet.

Bei dieser Blockhochlager-Einrichtung ist der freie Zugriff auf jede gelagerte Lagereinheit gewährleistet, in den meisten Fällen müssen aber, bevor die gewünschte Lagereinheit entnommen werden kann, mehrere Lagereinheiten umgeräumt werden. Dieses Umräumen ist sehr zeitaufwendig, und während dieses Zeitaufwands ist die betroffene Ebene nicht direkt bedienbar. In gleicher Weise arbeitet die Einrichtung, welche in der WO-A-88/03904 dargestellt ist.

Da derartige Blockhochlager vollautomatisch, gesteuert von einem zentralen Rechner, arbeiten, wird jeder Lagereinheit der entsprechende Lagerplatz zugeordnet. Wenn nun zur Entnahme einer Lagereinheit die davorstehenden Lagereinheiten umgeräumt werden müssen, bedeutet dies, dass der Rechner jeder verschobenen Lagereinheit einen neuen Lagerplatz zuordnen muss. Dies verlangt eine grosse Rechnerkapazität. Durch die ständige Umorganisation, für welche zusätzlich eine hohe Energie aufgewendet werden muss, steigt auch die Anfälligkeit für Fehlmanipulationen.

Des weiteren sind auch Hochregallager bekannt, deren Regale rechts und links einer Gasse angeordnet sind, die jeweils in der Tiefe nur Platz für eine Lagereinheit aufweisen. In der Gasse ist eine Lagermaschine untergebracht, welche horizontal und vertikal vor den Regalen verfahrbar ist und demzufolge Zugriff auf jeden Lagerplatz hat. Die Lagerung der Lagereinheiten erfolgt demzufolge in vertikalen Ebenen.

Derartige Hochregallager sind vom System her langsam, da immer nur eine bis maximal drei Lagereinheiten (je nach Ausbau des Systems) eingelagert bzw. ausgelagert werden können. Dieses Hochregallager hat aber gegenüber dem vorgängig beschriebenen System den Vorteil, dass auf jede eingelagerte Lagereinheit direkt zugegriffen werden kann, ohne dass andere Lagereinheiten umgeräumt werden müssen.

Aus der DE-A-23 24 858 ist des weiteren eine Lageranlage bekannt, in welcher die Lagerstückgüter in Kanälen, die in übereinanderliegenden Lagerebenen angeordnet sind, unterbringbar sind. Hierzu ist in einer quer zu den Kanälen verlaufenden Gasse ein Umsetzer verfahrbar angebracht. Im Umsetzer untergebracht ist eine Lastgreifeinrichtung, die vom Umsetzer aus in einen entsprechenden Kanal einfahrbar ist. Diese Lastgreifeinrichtung kann ein entsprechendes Lagerstückgut erfassen und anheben und über die weiteren eingelagerten Lagerstückgüter in den Umsetzer bringen. Der Umsetzer kann dann zusammen mit der Lastgreifeinrichtung und der aufgenommenen Last entlang der Gasse verfahren und die Last beispielsweise einem Lift übergeben. Danach fährt der Umsetzer mit der Lastgreifeinrichtung vor einen nächsten Kanal, aus welchem ein weiteres Lagerstückgut herausgenommen werden soll.

Das Einlagern erfolgt in umgekehrter Reihenfolge der oben angegebenen Schritte.

Diese Lageranlage weist den Nachteil auf, dass die Entnahme oder das Einbringen eines Lagerstückgutes eine gewisse Zeitspanne in Anspruch nimmt, während welcher die Lastengreifeinrichtung und der Umsetzer für andere Bewegungen nicht verfügbar sind. Dies kommt daher, dass der Umsetzer und die Lastengreifeinrichtung miteinander gekoppelt sind. Dadurch muss jeweils ein voller Zyklus abgeschlossen sein, bevor ein nächster Zyklus zur Entnahme oder Einbringung eines Lagerstückgutes in Angriff genommen werden kann, wodurch der Zeitaufwand sehr gross wird.

Die Aufgabe der Erfindung besteht nun darin, ein Hochleistungs-Blocklager mit Mitteln zum Ein- und Auslagern von Lagergut zu schaffen, in welchem ein Zugriff auf jeden Lagerplatz gewährleistet ist, ohne dass andere gelagerte Lagereinheiten umgeräumt werden müssen, und bei welchem die Betriebszeiten auf ein Minimum beschränkt werden können.

Erfindungsgemäss erfolgt die Lösung der Aufgabe durch die in der Kennzeichnung des Anspruchs 1 angegebenen Merkmale.

Mit der Anordnung, dass jeder Kanal an eine parallel dazu verlaufende Fahrbahn angrenzt, und dass eine entlang dieser Fahrbahn verfahrbare Transporteinrichtung angeordnet ist, welche auf jeden der in den angrenzenden Kanälen angeordneten Lagerplätzen Zugriff hat, ist das Einbringen und Entnehmen eines Lagerstückgutes auf jeden bzw. von jedem Lagerplatz gewährleistet. Ein Umräumen von anderen Lagerstückgütern ist nicht erforderlich, im Regelfall bleibt ein einmal eingelagertes Lagerstückgut an seinem ursprünglich zugewiesenen Lagerplatz stehen. Der Zeitaufwand für ein fortlaufendes Einlagern oder Entnehmen von einzelnen Lagerstückgütern bleibt gering, da jede Transporteinrichtung, die jeweils in einem Kanal verfahrbar ist und jedes Transportmittel, das entlang der Gasse verfahrbar ist, sofort den nächsten Auftrag in Angriff nehmen kann, sobald sie das angehobene und zu verschiebende Lagerstückgut abgesetzt hat.

Eine vorteilhafte Ausgestaltung der Erfindung besteht darin, dass die Kanäle unmittelbar nebeneinander angeordnet sind, wobei über jedem Kanal eine Fahrbahn angebracht ist, und dass die Transporteinrichtung als eine längs dieser Fahrbahn verfahrbare Fahr- und Hubvorrichtung ausgebildet ist, mit welcher ein Lagerstückgut anhebbar ist, und über die anderen im Kanal gelagerten Lagerstückgüter verfahrbar ist. Damit wird der verlangte direkte Zugriff auf jeden Lagerplatz gewährleistet. In einer Ebene eines grossflächigen Hochleistungs-Blocklagers können mehrere Lagerebenen nebeneinander und/oder hintereinander angeordnet sein. Eine Lagerebene bildet demzufolge eine Einheit, welche mit den entsprechenden Transportmittel und Zu- und Wegführvorrichtungen von den Verfahrwegen her optimal bedienbar ist.

In vorteilhafter Weise ist pro Lagerebene eine Gasse vorgesehen, welche an einem Ende der Gesamtlänge der Kanäle angeordnet ist. Die Schienen, entlang welcher die Verfahr- und Hubvorrichtung verfahrbar ist, erstrecken sich in bevorzugter Weise über die Gesamtlänge jedes Kanals und über die Gasse. Dies bringt auch den Vorteil mit sich, dass ein von der Verfahr- und Hubvorrichtung gehaltenes Lagerstückgut problemlos auf das in der Gasse angeordnete Transportmittel abgesetzt werden kann, da die Schienen für die Verfahr- und Hubvorrichtung quer über die Gasse weitergeführt sind.

Diese Ausgestaltung der Erfindung besteht in vorteilhafter Weise aus vertikalen Lagerstützen, die je in einer Ecke eines Lagerplatzes für ein Lagerstückgut angeordnet sind, und an welche in jeder Lagerebene beidseits jeden Kanals und längs dazu verlaufende horizontale Längsprofile befestigt sind, welche aus einem C-Profil bestehen. Die Schenkel des C-Profils sind hierbei in vorteilhafter Weise gegen die Mitte des Kanals gerichtet, so dass diese Längsprofile gleichzeitig als Fahrschienen für die Verfahr- und Hubvorrichtung dienen können, welche jeweils den darunterliegenden Kanal der Lagerebene bedient. Parallel zu den Längsprofilen sind in vorteilhafter Weise horizontal verlaufende Auflagerprofile angeordnet, auf welchen die Lagerstückgüter abstellbar sind. Diese Auflagerprofile sind auf Querstreben abgestützt, welche in Querrichtung die Lagerstützen verbinden.

In vorteilhafter Weise werden die im erfindungsgemässen Hochleistungs-Blocklager zu lagernden Lagereinheiten auf plattenförmige Bodenstücke angeordnet, welche in einfacher Weise und automatisch von der Verfahr- und Hubvorrichtung mit ihren vier absenk- und anhebbaren vertikal angeordneten Armen ergriffen werden können, und dass die dergestalt einzulagernden plattenförmigen Bodenstücke ohne weiteres auf den Auflagerprofilen des entsprechenden Lagerplatzes absetzbar sind.

Eine andere Ausgestaltung der Erfindung besteht in vorteilhafter Weise darin, dass jeweils eine Fahrbahn zwischen zwei Kanälen, in welchen die Lagerstückgüter lagerbar sind, auf demselben Niveau angeordnet ist, so dass die Transporteinrichtung die Lagerstückgüter quer zum entsprechenden Kanal vom Lagerplatz entnehmbar sind. Dadurch kann der beanspruchte Raum und insbesondere das Höhenmass reduziert werden.

In vorteilhafter Weise ist bei dieser Ausgestaltung der Erfindung in jedem Kanal der der Gasse benachbarte erste Lagerplatz als Umladeplatz ausgebildet. Dadurch lässt sich ein Umladen vom Fahrzeug des Kanals auf das Transportmittel in der Gasse bzw. umgekehrt besser bewerkstelligen. Dieser Platz kann zudem eine Pufferfunktion für die Lagerstückgüter übernehmen.

Weitere vorteilhafte Ausgestaltungen der Erfindung ergeben sich aus den weiteren abhängigen Ansprüchen.

Ausführungen des erfindungsgemässen Hochleistungs-Blocklagers werden nachfolgend anhand der beiliegenden Zeichnung beispielhaft näher erläutert.

Es zeigt
**Fig. 1** eine schematische Darstellung einer Draufsicht auf eine Lagerebene eines ersten Ausführungsbeispiels eines Hochleistungs-Blocklagers;
**Fig. 2** eine Vertikalschnittdarstellung quer zu den Kanälen eines Ausschnitts des Hochleistungs-Blocklagers entlang Linie II-II gemäss Fig. 1;
**Fig. 3** eine vertikalschnittdarstellung längs der Kanäle eines Ausschnitts des Hochleistungs-Blocklagers entlang Linie III-III gemäss Fig. 2;
**Fig. 4a - 4c** je eine teilweise Ansicht in einem Kanal mit eingelagerten Lagerstückgütern;
**Fig. 5** eine perspektivische Darstellung eines Ausschnittes des Hochleistungs-Blocklagers gemäss Fig. 1 bis 4:
**Fig. 6** eine schematische Darstellung einer Draufsicht auf eine Lagerebene eines zweiten Ausführungsbeispiels eines Hochleistungs-Blocklagers;
**Fig. 7** eine Vertikalschnittdarstellung quer zu den Kanälen eines Anschnitts dieses Hochleistungs-Blocklagers entlang Linie VII-VII gemäss Fig. 6; und
**Fig. 8** eine Vertikalschnittdarstellung längs der Kanäle eines Ausschnitts dieses Hochleistungs-Blocklagers entlang Linie VIII-VIII gemäss Fig. 6.

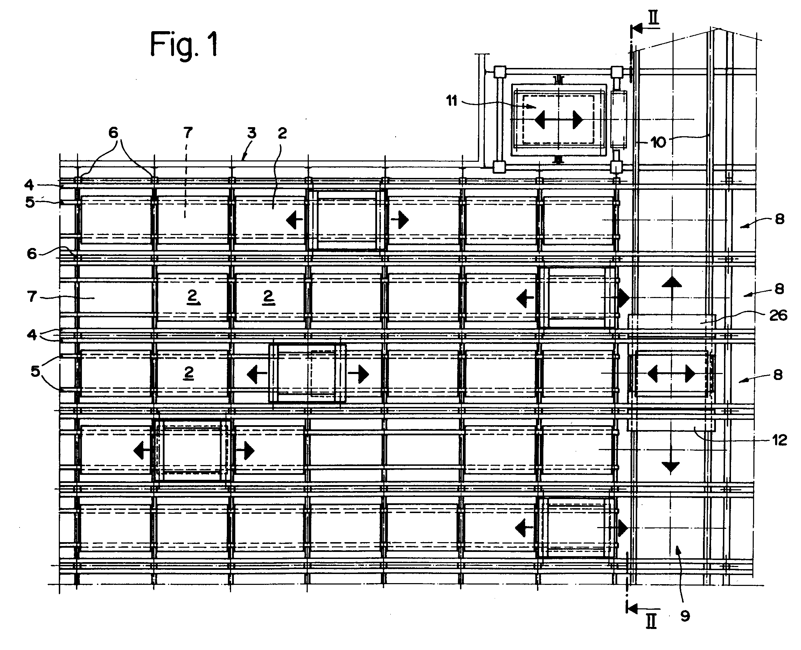

Ein erstes Ausführungsbeispiel eines Hochleistungs-Blocklagers 1 zur Lagerung von einzelnen Lagerstückgütern 2 besteht, wie in den Figuren 1 bis 5 dargestellt ist, aus mehreren übereinander angeordneten horizontalen Lagerebenen 3. Eine derartige Lagerebene 3 wird, wie in der Draufsicht auf eine derartige Lagerebene 3 in Fig. 1 dargestellt ist, aus parallel zueinander angeordneten, horizontalen Längsprofilen 4 und parallel dazu verlaufende Auflagerprofile 5 gebildet. Die Längsprofile 4 sind an den Lagerstützen 6 befestigt, die vertikal ausgerichtet und je an einer Ecke eines Lagerplatzes 7 angeordnet sind. Diese Auflagerprofile 5 sind durch Querstreben gehalten, welche in Querrichtung die Lagerstützen 6 verbinden.

Zwischen zwei Reihen von Lagerstützen 6 entlang der Längsprofile 4 wird je ein Kanal 8 gebildet. Die parallel zu den Längsprofilen 4 verlaufenden Auflagerprofile 5 sind so angeordnet, dass pro Lagerplatz 7 ein Lagerstückgut 2 auf diese Auflagerprofile 5 abgesetzt werden kann. Pro Kanal 8 sind somit mehrere Lagerstückgüter 2 in Reihe hintereinander lagerbar.

Pro Lagerebene 3 ist eine Gasse 9 vorgesehen, die rechtwinklig zu den Längsprofilen 4 in der Lagerebene 3 verläuft. Die Gasse 9 weist gemäss einer Ausführungsart, wie sie in Fig. 1 dargestellt ist, ein Schienenpaar 10 auf, welches durch die ganze Gasse 9 geführt ist. Dieses Schienenpaar 10 ist auf den Längsprofilen 4 befestigt und bildet eine Führungsbahn für einen entlang dieses Schienenpaares verfahrbaren Wagen 26. Es sind ausser dem Wagen auch andere Transportmittel denkbar, die entlang der Gasse 9 verlaufen können und die entsprechende Funktion erfüllen. Neben der Führungsbahn ist ein schematisch dargestellter Lift 11 angeordnet, welcher in bekannter Weise als Zubringer für die einzelnen Lagerebenen 3 dient. Ein auf dem Wagen 26 sich befindendes Lagerstückgut kann, wenn sich der Wagen 26 vor dem Lift 11 befindet, durch bekannte Mittel in den Lift 11 gebracht werden und umgekehrt. Durch den auf dem Schienenpaar 10 verfahrbaren Wagen 26 lässt sich ein entsprechendes Lagerstückgut in jede Ein- bzw. Auslagerungsposition 12 eines Kanales 8 bringen.

Die Längsprofile 4 werden über die Gasse 9 weitergeführt, so dass eine Verfahr- und Hubvorrichtung aus dem entsprechenden Kanal bis über die Gasse 9 verfahrbar ist, wie nachfolgend noch beschrieben wird.

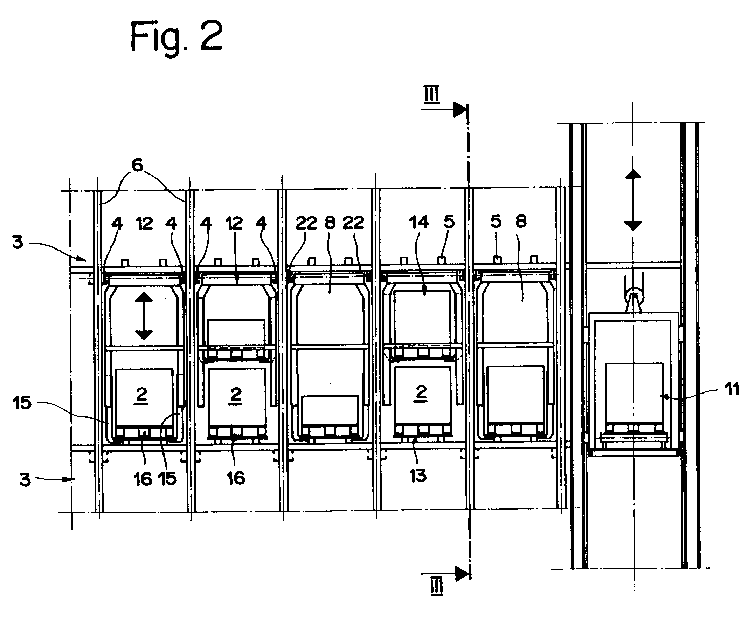

In der Schnittdarstellung gemäss Fig. 2 ist die Lage der übereinander angeordneten Lagerebenen 3 ersichtlich. Der gegenseitige Abstand dieser übereinander angeordneten Lagerebenen 3 entspricht mindestens der doppelten Höhe eines eine maximale Höhe aufweisenden und zu lagernden Lagerstückgutes 2.

Pro Lagerstütze 6 und Lagerebene 3 sind je zwei Längsprofile 4 beidseits einer Lagerstütze 6 befestigt. Die Längsprofile 4 bestehen je aus einem C-Profil, wobei die Schenkel dieses Profils jeweils gegen die Mitte eines Kanals 8 gerichtet sind. Diese Längsprofile 4 bilden paarweise Fahrschienen und somit eine Fahrbahn für eine Verfahr- und Hubvorrichtung 12. In jedem Kanal 8 dieses Blockhochlagers 1 ist pro Lagerebene 3 eine Verfahr- und Hubvorrichtung 12 vorgesehen, welche entlang der Längsprofile 4 und demzufolge entlang der Fahrbahn des Kanals 8 verfahrbar ist.

Mit dieser Verfahr- und Hubvorrichtung 12 lässt sich ein Lagerstückgut 2 von einer Lagerposition 13 in eine angehobene Position 14 bringen. Somit können die im gleichen Kanal 8 gelagerten weiteren Lagerstückgüter 2 durch das von der Verfahr- und Hubvorrichtung 12 angehobene Lagerstückgut (Position 14) überfahren werden.

Zum Anheben eines entsprechenden Lagerstückgutes 2 ist die Verfahr- und Hubvorrichtung 12 in bekannter Weise mit vier Armen 15 ausgerüstet, die in vertikaler Richtung gemeinsam anhebbar und absenkbar sind.

Damit das Ergreifen und somit das Anheben und Absenken der Lagerstückgüter 2 automatisch erfolgen kann, besteht ein Lagerstückgut 2 aus einem eine Normgrösse aufweisenden plattenförmigen Bodenstück 16, das beispielsweise aus einer Palette oder aus einer Platte, auf welche eine Palette aufgesetzt ist, bestehen kann, auf welchem das Lagergut angeordnet ist. Die Arme 15 der Verfahr- und Hubvorrichtung 12 können somit zum Anheben eines Lagerstückgutes 2 in dessen plattenförmigen Bodenstück 16 eingreifen.

In Fig. 2 ist auch der neben den Kanälen 8 angeordnete Lift 11 ersichtlich, mit welchem die ein- und auszulagernden Lagerstückgüter 2 den entsprechenden Lagerebenen 3 zugeführt bzw. von diesen weggeführt werden kann.

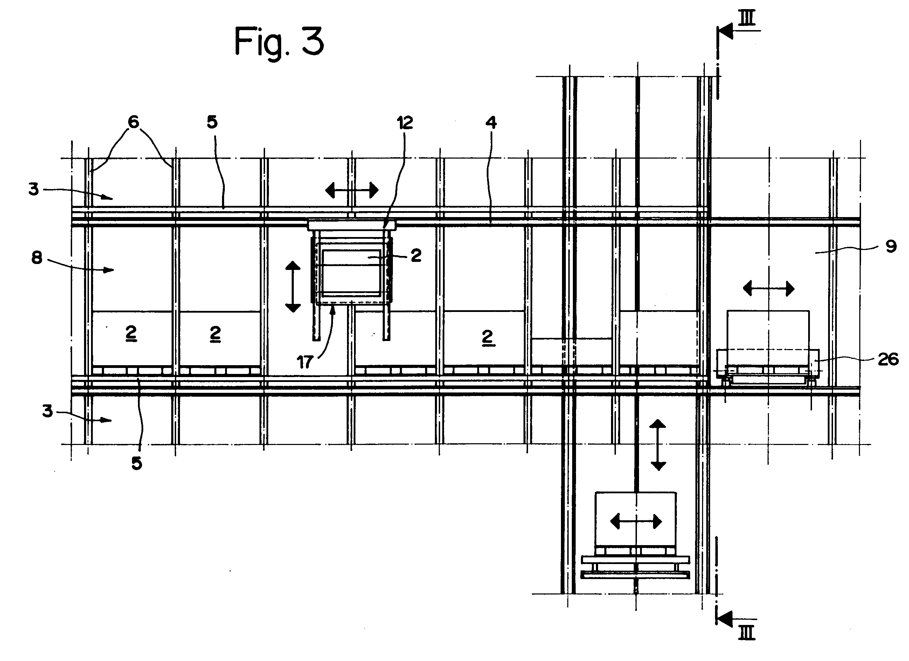

In der Darstellung nach Fig. 3, welche einen Schnitt entlang Linie III-III gemäss Fig. 2 zeigt, ist die Verfahr- und Hubvorrichtung 12 eines Kanals 8 mit angehobenem Lagerstückgut 2 in einer Position 17 dargestellt, in welcher sich das angehobene Lagerstückgut 2 über die weiteren im Kanal 8 gelagerten Lagerstückgüter 2 verfahren lässt. Die Verfahr- und Hubvorrichtung 12 kann entlang der Längsprofile 4, die die Fahrbahn bilden, bis in die Gasse 9 verfahren werden, wozu die entsprechenden Längsprofile 4 quer über die Gasse 9 weitergeführt sind. In dieser Position der Verfahr- und Hubvorrichtung 12 kann demzufolge ein entsprechendes Lagerstückgut auf den entsprechend positionierten Wagen 26 abgesetzt oder von diesem aufgenommen werden.

Die Verfahr- und Hubvorrichtung 12 ist in den Längsprofilen 4 durch Rollen 22 geführt, wie aus Fig. 2 ersichtlich ist, wobei die Rollen 22 mit einem nicht dargestellten Antrieb versehen sind, mit welchem die Verfahr- und Hubvorrichtung 12, gesteuert durch einen nicht dargestellten Rechner, jeweils in die gewünschte Lage im Kanal 8 gebracht werden kann.

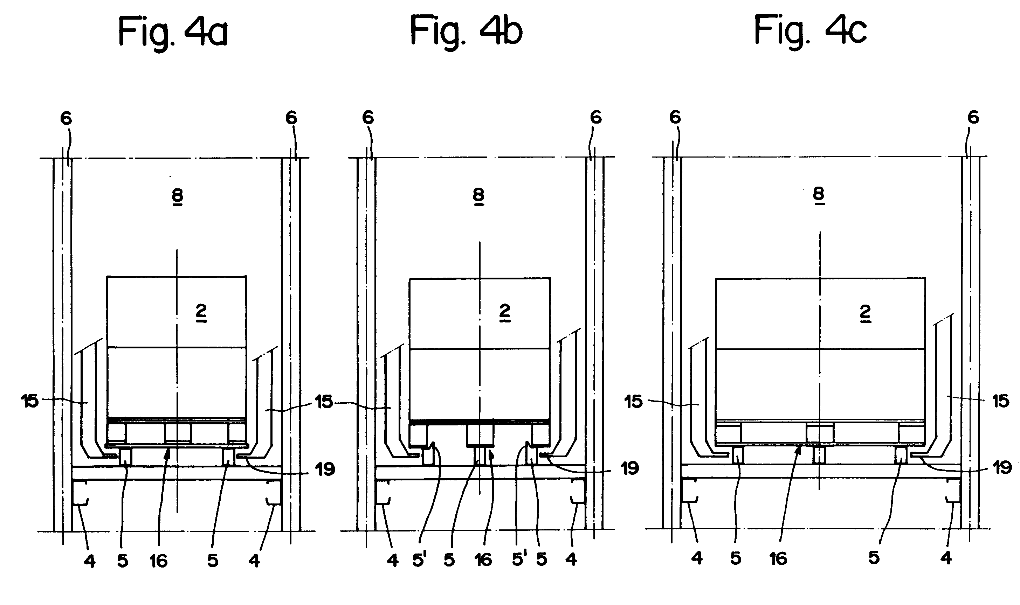

In den Fig. 4a bis 4c ist je eine Ansicht in einen unteren Ausschnitt eines Kanals 8 mit darin eingelagerten Lagerstückgütern 2 dargestellt. Hierbei sind die Lagerstützen 6, die Längsprofile 4 und die Auflagerprofile 5 ersichtlich, welche Auflagerprofile 5 auf Querstreben aufliegen, die zwischen jeweils zwei Lagerstützen 6 eingesetzt sind.

Gemäss Fig. 4a besteht das plattenförmige Bodenstück 16 aus einer Grundplatte und einer darauf aufgesetzten Palette. Dabei stimmen die Grundplatte und die Palette in der Grösse im wesentlichen überein. Im eingelagerten Zustand, wie dies in Fig. 4a dargestellt ist, kommt die Grundplatte auf zwei Auflagerprofile 5 zu liegen, wobei die Längsseite der Grundplatte bzw. der Palette in Kanalrichtung ausgerichtet ist.

In der Ausführung, wie sie in Fig. 4b dargestellt ist, besteht das plattenförmige Bodenstück 16 nur aus einer Palette, die auf die Auflagerprofile 5 abgesetzt ist. Hierbei sind pro Kanal 8 drei Auflagerprofile 5 vorgesehen, wobei die beiden äusseren mit einem Führungsstück 5' versehen sind, durch welche beim Aufsetzen der Palette diese zentriert wird. Auch in diesem Ausführungsbeispiel ist die Längsseite der Palette in Kanalrichtung ausgerichtet.

Im Ausführungsbeispiel, wie es in Fig. 4c dargestellt ist, besteht das plattenförmige Bodenstück 16, entsprechend zu Fig. 4b, ebenfalls nur aus einer Palette, wobei die Längsseite dieser Palette quer zur Kanalrichtung ausgerichtet ist. Zur Aufnahme der Palette im eingelagerten Zustand sind drei Auflagerprofile 5 vorgesehen. Es ist denkbar, dass die Ausführungsformen, wie sie in den Fig. 4a bis 4c dargestellt sind, auch miteinander kombiniert werden können.

Das plattenförmige Bodenstück 16 steht im eingelagerten Zustand je seitlich über die äusseren Auflagerprofile 5 vor, wie in den Fig. 4a bis 4c ersichtlich ist. Hierdurch wird Raum geschafft, in welchem die absenk- und anhebbaren Arme 15 der Verfahr- und Hubvorrichtung 12 mit ihren horizontalen Abwinkelungen 19 unter das plattenförmige Bodenstück 16 eingreifen können. Das Eingreifen bzw. Loslassen des plattenförmigen Bodenstückes 16 kann in bekannter Weise durch Verschwenken der Arme 15 um je eine horizontale Achse, welche parallel zur Fahrtrichtung der Verfahr- und Hubvorrichtung 12 verläuft, erfolgen. Es ist auch möglich, die Arme 15 mit ihren Abwinklungen 19 unverschwenkbar in der Verfahr- und Hubvorrichtung 12 zu halten, so dass sie nur anhebbar und absenkbar sind. Zum Ergreifen eines Lagerstückgutes 2 im Kanal 8 verfährt demzufolge die Verfahr- und Hubvorrichtung 12 von der Gasse 9 her mit abgesenkten Armen 15 in den Kananl 8 ein, so dass die Abwinklungen 19 unter den plattenförmigen Bodenstücken 15 der eingelagerten Lagerstückgüter 2 durchfahren können, bis das entsprechende Lagerstückgut, das entnommen werden soll, erreicht ist.

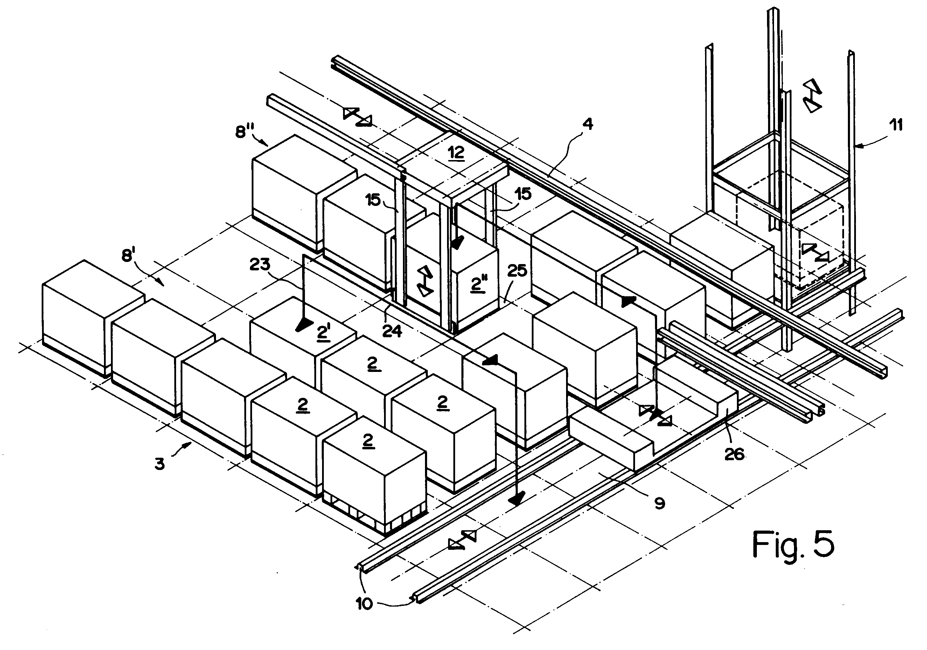

Der Vorgang der Entnahme eines Lagerstückgutes aus dem Hochleistungs-Blocklager 1 bzw. das Einbringen eines Lagerstückgutes wird anhand der perspektivischen Darstellung einer Lagerebene gemäss Fig. 5 nachfolgend beschrieben. Das Lagerstückgut 2', welches sich im Kanal 8' der entsprechenden Lagerebene 3 befindet, soll entnommen werden. Hierzu fährt die für diesen Kanal 8' zuständige, nicht dargestellte Verfahr- und Hubvorrichtung 12 entlang der Längsprofile 4, gesteuert durch den Rechner, in die Position über dem Lagerstückgut 2'. Danach werden die Arme 15 der Verfahr- und Hubvorrichtung 12 abgesenkt und greifen in das plattenförmige Bodenstück 16 des Lagerstückgutes 2' ein. Danach wird das Lagerstückgut 2' entlang Pfeil 23 in die angehobene Position gebracht.

Wenn diese angehobene Position erreicht ist, erhält die Verfahr- und Hubvorrichtung 12 vom Rechner den Befehl, sich entlang der Längsprofile 4 (Pfeil 24) zu verschieben, bis sie sich in der Gasse 9 genau über dem Wagen 26 befindet, der hierzu vor diesem Kanal 8' positioniert wurde. Hier wird nun das Lagerstückgut 2' abgesenkt, auf den Wagen 26 aufgesetzt, die Arme 15 geben das Lagerstückgut 2' frei und werden in die angehobene Position zurückgezogen. Danach fährt die Verfahr- und Hubvorrichtung 12 in den Kanal 8' zurück. Der Wagen 26 wird anschliessend in Bewegung gesetzt, gesteuert durch den Rechner, und bringt das Lagerstückgut 2' in den Lift 11, der das Lagerstückgut 2' zum gewünschten Ausgang bringt.

Sobald die Verfahr- und Hubvorrichtung 12 das Lagerstückgut 2' auf den Wagen 26 abgesetzt hat, ist sie wieder frei verfügbar, und kann beispielsweise bereits ein nächstes Lagerstückgut aus dem Kanal 8' holen.

Gleichzeitig können die Verfahr- und Hubvorrichtungen der anderen Kanäle, unabhängig voneinander und unabhängig vom Wagen, Lagerstückgüter aufnehmen und in eine Warteposition, vorteilhaft am ersten Lagerplatz (Stand by), in unmittelbarer Nähe der Gasse fahren, oder vom Wagen übernommene Lagerstückgüter einlagern.

Das Einbringen eines Lagerstückgutes in das Hochleistungs-Blocklager erfolgt in umgekehrter Weise, indem der Wagen 26 das vom Lift 11 gebrachte Lagerstückgut in die Position bringt, die mit dem Kanal 8'', in welchem das entsprechende Lagerstückgut eingelagert werden soll, übereinstimmt. Hier wird nun das Lagerstückgut durch die Verfahr- und Hubvorrichtung 12 übernommen, angehoben und über den freien Lagerplatz 25 gebracht, der dem einzulagernden Lagerstückgut vom Rechner zugeordnet wurde. Hier wird das Lagerstückgut abgesenkt, die Arme 15 geben das Lagerstückgut 2'' in Fig. 5 frei und werden in die angehobene Position gebracht. Sobald das Lagerstückgut vom Wagen 26 durch die Verfahr- und Hubvorrichtung 12 weggenommen wurde, steht der Wagen 26 sofort für weitere Bewegungen zur Verfügung.

Die Verfahr- und Hubvorrichtung 12, welche entlang der horizontalen Längsprofile 4 verfahrbar ist, die oberhalb der Lagerebene 3 angeordnet sind, kann Arme 15 aufweisen, die unverschwenkbar mit der Verfahr- und Hubvorrichtung 12 verbunden sind, in vertikaler Richtung aber anheb- und absenkbar sind.

Wenn nun das Lagerstückgut 2' aus dem Kanal 8' entnommen werden soll, fährt die Verfahr- und Hubvorrichtung 12 mit abgesenkten Armen 15 von der Gasse 9 her zum Lagerstückgut 2', wobei die horizontalen Abwinkelungen 19, welche am unteren Ende der Arme 15 angebracht sind, unterhalb der plattenförmigen Bodenstücke 16 der in diesem Kanal weiteren gelagerten Lagerstückgüter 2 hindurch (siehe Fig. 4a - 4c).

Sobald nun die Verfahr- und Hubvorrichtung 12 die Position erreicht hat, die dem Lagerstückgut 2' entspricht, werden die Arme 15 der Verfahr- und Hubvorrichtung 12 gemeinsam angehoben, das Lagerstückgut 2' wird dadurch erfasst und ebenfalls angehoben, so dass es beim Vorfahren der Verfahr- und Hubvorrichtung 12 gegen die Gasse 9 hin über die anderen im Kanal 8 gelagerten Lagerstückgüter 2 verfahren wird. Wenn die Verfahr- und Hubvorrichtung 12 die Gasse 9 erreicht hat, wird das Lagerstückgut 2' auf den in Position gefahrenen Wagen 26, der entlang des Schienenpaares 10 verfahrbar ist, abgesenkt, wonach die Verfahr- und Hubvorrichtung 12 mit abgesenkten Armen 15 wieder in den Kanal 8' zurückfährt. Der Wagen 26 bringt das Lagerstückgut 2' zum Weitertransport in den Lift 11.

In umgekehrter Weise wird ein Lagerstückgut 2'' eingelagert. Der Wagen 26 fährt zum entsprechenden Kanal 8, die Verfahr- und Hubvorrichtung 12 fährt mit abgesenkten Armen 15 vom Kanal 8'' her über das auf dem Wagen 26 sich befindende Lagerstückgut 2'', wobei die horizontalen Abwinkelungen 19 unter das plattenförmige Bodenstück 16 gelangen, die Arme 15 werden zusammen mit dem Lagerstückgut 2'' angehoben, wonach die Verfahr- und Hubvorrichtung 12 das Lagerstückgut 2'' zum freien Lagerplatz fährt, der dem Lagerstückgut 2'' vom Rechner zugeordnet wurde. An dieser Position wird das Lagerstückgut abgesetzt. Die Verfahr- und Hubvorrichtung 12 kann danach mit abgesenkten Armen 15 zu einem anderen Lagerplatz verfahren werden, wonach ein weiterer Arbeitsvorgang gestartet werden kann. Sie kann aber auch in eine Stand-by-Position gefahren werden.

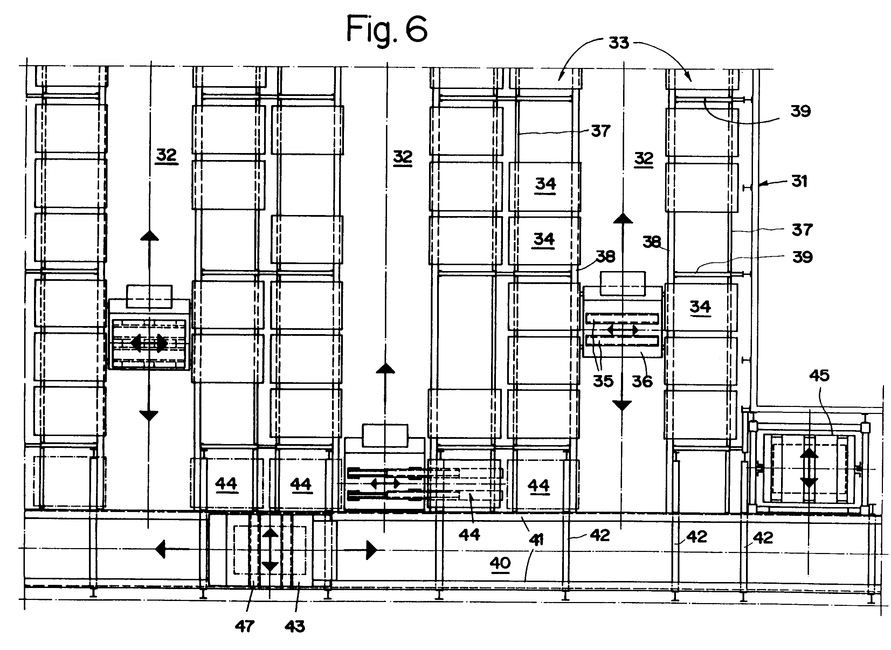

Eine andere Ausführungsart eines erfindungsgemässen Hochleistungs-Blocklagers ist in den Fig. 6 bis 8 dargestellt. In der Draufsicht auf eine Lagerebene 31 eines Hochleistungs-Blocklagers, wovon mehrere übereinander angeordnet sind, ist ersichtlich, dass zu jeder Fahrbahn 32 beidseits ein parallel dazu verlaufender Kanal 33 angeordnet ist. In diesen Kanälen 33 sind wiederum, entsprechend den Fig. 1 bis 5, Lagerstückgüter 34 einlagerbar. Entlang jeder Fahrbahn 32 ist eine Transporteinrichtung 35 verfahrbar, welche aus einem Wagen besteht, der in bekannter Weise mit Teleskopgabeln 36 ausgestattet ist. Mit diesen Teleskopgabeln 36, die quer zur Fahrbahn 32 und zu den Kanälen 33 ausfahrbar ist, ist ein entsprechendes Lagerstückgut 34 in den Kanal 33 einbringbar oder aus diesem entnehmbar.

Zur Aufnahme der Lagerstückgüter 34 ist jeder Kanal 33 mit zwei längsverlaufenden, in der Lagerebene 31 liegenden Profilen 37 und 38 ausgestattet, auf welchen die Lagerstückgüter 34 absetzbar sind. Die jeweils an die Fahrbahn 32 angrenzenden Profile 38 zweier Kanäle 33 bilden die Fahrschienen für die Transporteinrichtung 35. Die Profile 37 und 38 sind durch vertikal angeordnete Rahmen 39 gehalten.

In jeder Lagerebene 31 ist an einem Ende der Kanäle 33 und der Fahrbahnen 32 eine quer dazu verlaufende Gasse 40 angeordnet, die durch ein Schienenpaar 41 gebildet wird, die durch entsprechende Querträger 42 in das Lagergestell integriert sind. Entlang des Schienenpaares 41 ist die Transporteinrichtung, die als Wagen 43 ausgebildet ist, verfahrbar. Der Wagen 43 ist seinerseits mit Teleskopgabeln 47 ausgestattet.

In jedem Kanal 33 ist der der Gasse 40 benachbarte erste Lagerplatz als Umladeplatz 44 ausgestaltet, auf welchen ein entsprechendes Lagerstückgut durch die als Fahrzeug ausgebildete Transporteinrichtung 35 aufgesetzt bzw. entnommen werden kann, wobei ein entsprechendes Lagerstückgut 34 auch vom Wagen 43 auf diesen Umladeplatz 44 bringbar bzw. von diesem entnehmbar ist. Der Wagen 43 kann demzufolge ein Lagerstückgut 34 von einem Umladeplatz 44 entnehmen, und dieses in eine als Lift 45 ausgebildete Zu- und Wegführvorrichtung bringen. Umgekehrt kann der Wagen 43 ein durch diesen Lift 45 angeliefertes Lagerstückgut 34 aus dem Lift 45 entnehmen und auf einen Umladeplatz 44 eines Kanals 33 bringen, wo das Lagerstückgut 34 durch das Fahrzeug 35 aufgenommen werden kann, um es in einen entsprechenden Lagerplatz im Kanal 33 zu bringen.

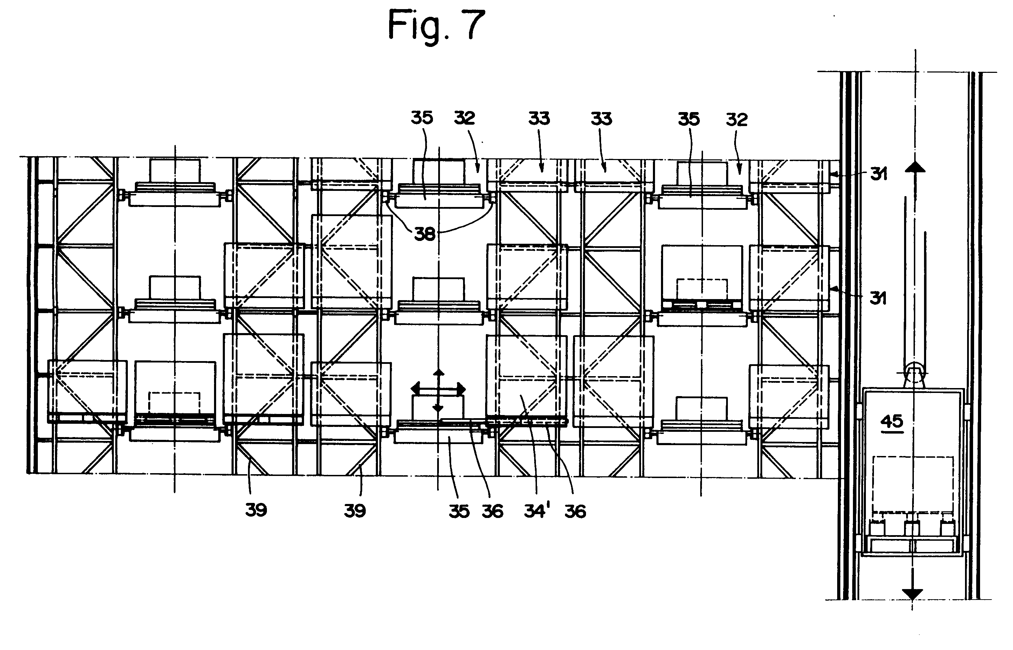

Wie aus der Schnittdarstellung gemäss Fig. 7 ersichtlich ist, ist bei dieser Ausführungsform der Abstand zwischen zwei Lagerebenen 31 kleiner, als beim vorhergehend beschriebenen Ausführungsbeispiel. Dadurch wird erreicht, dass die Höhe eines entsprechenden Hochleistungs-Blocklagers kleiner ausgeführt werden kann.

In dieser schnittdarstellung sind die Kanäle 33 und die Gassen 32, in welchen das Fahrzeug 35 verfahrbar ist, ersichtlich.

Zur Entnahme eines Lagerstückgutes 34' aus einem Kanal 33 fährt das Fahrzeug 35 entlang der Fahrbahn 32, bis es sich vor dem zu entnehmenden Lagerstückgut 34' befindet. Danach werden die Teleskopgabeln 36 seitlich ausgefahren, so dass sie in die Palette 46 einfahren, mit welcher jedes Lagerstückgut 34, 34' ausgestattet ist. Die Teleskopgabeln 36 werden dann angehoben, das Lagerstückgut 34' wird ebenfalls angehoben, wonach durch Zurückziehen der Teleskopgabeln 36 das Lagerstückgut 34' auf das Fahrzeug 35 verfahren wird und darauf abgesetzt wird. Danach kann das Fahrzeug 35 das entsprechende Lagerstückgut 34' auf den Umladeplatz 44 bringen, von wo es durch den Wagen 43 entnommen und dem Lift 45 zugeführt werden kann. Das Einlagern eines entsprechenden Lagerstückgutes 34 erfolgt in umgekehrter Reihenfolge.

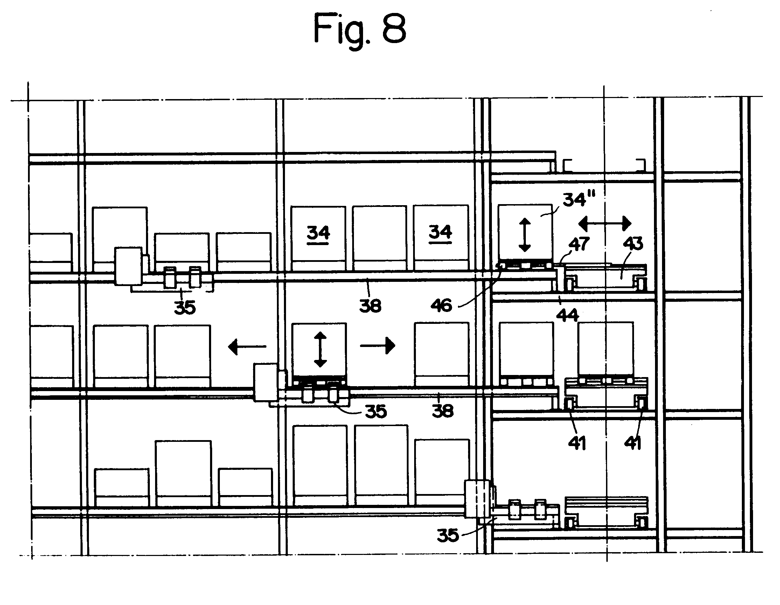

Vom Umladeplatz 44, wie aus der Schnittdarstellung gemäss Fig. 8 entnehmbar ist, kann ein entsprechendes Lagerstückgut 34'' durch den Wagen 43 aufgenommen werden. Hierzu ist der Wagen 43 ebenfalls mit Teleskopgabeln 47 ausgestattet, welche in die Palette 46 des entsprechenden Lagerstückgutes 34'' eingefahren werden können. Danach wird das Lagerstückgut 34'' angehoben und auf den Wagen 43 verschoben. Der Wagen 43 kann dann das entsprechende Lagerstückgut 34'' zum Lift 45 bringen, wo es in entsprechender Weise abgeladen wird. Das Aufsetzen eines Lagerstückgutes 34 auf einen Umladeplatz 44 erfolgt in umgekehrter Weise.

Sobald das Fahrzeug 35 und der Wagen 43 ein zu verschiebendes Lagerstückgut 34 abgegeben haben, sind sie wieder frei verfügbar, um eine weitere Bewegung durchzuführen. Hierbei kann der Umladeplatz 44 als Puffer dienen, so dass das Fahrzeug 35 bzw. der Wagen 43 schneller wieder verfügbar ist. Hierbei ist es auch denkbar, dass der Umladeplatz 44 mit einem nicht dargestellten Drehtisch ausgestattet ist, mittels welchem das darauf sich befindende Lagerstückgut 34 um 90° drehen kann, so dass die Teleskopgabeln 47 des Wagens 43 gleich in die Palette 46 einfahren können, wie die Teleskopgabeln 36 des Fahrzeuges 35.

Mit diesen Systemen kann die Einlagerung der einzelnen Lagerstückgüter chaotisch erfolgen, jedem Lagerstückgut wird ein freier Lagerplatz vom Rechner zugeordnet, auf welchem es in der Regel dann stehen bleibt, bis es wieder entnommen werden muss. Dadurch ist kein Umräumen erforderlich, die Organisation der Lagerung, die durch den Rechner vorgenommen wird, ist einfach. Die Steuerung der Wagen 26 und 43 und der Verfahr- und Hubvorrichtungen 12 bzw. der Fahrzeuge 35 kann in einfacher Weise durch bekannte Mittel erfolgen, so dass die Störanfälligkeit sehr gering ist.

Durch diese Art der Lagerung ist es möglich, die Lagerstückgüter in einer Reihenfolge aus dem Lager zu entnehmen, die direkt vorsortiert ist und in dieser Reihenfolge beispielsweise auf einen Lastwagen verladen werden kann.

Da die Transporteinrichtungen, die Transportmittel und die Zu- und Wegführeinrichtungen jeweils autonom arbeiten, entstehen nur minimale Wartezeiten.

Je nach verlangter Lagerkapazität und Aus- bzw. Einlagerleistung können die Anzahl der Kanäle und deren Längen, die Anzahl der Gassen und deren Längen und die Anzahl der Zu- und Wegführeinrichtungen sowie die Anzahl der übereinander angeordneten Lagerebenen entsprechend angepasst werden.

## Patentansprüche

1. Hochleistungs-Blocklager mit Mitteln zum Ein- und Auslagern von Lagergut, bestehend aus mehreren übereinander angeordneten horizontalen Lagerebenen, wovon jede aus parallel zueinander verlaufenden Kanälen zusammengesetzt ist, in welchen die einzelnen Lagerstückgüter in Reihe hintereinander auf entsprechenden Lagerplätzen lagerbar sind, und wovon jede Lagerebene mit mindestens einer Gasse versehen ist, welche im wesentlichen rechtwinklig zu den Kanälen verläuft und in welcher Transportmittel angeordnet sind, die mit einer Zu- und Wegführvorrichtung für die Bedienung der einzelnen Lagerebenen zusammenwirken und jeder Kanal (8; 33) an eine parallel dazu verlaufende Fahrbahn (4; 32) angrenzt, in welcher mindestens eine entlang dieser Fahrbahn (4; 32) verfahrbare eigenständige Transporteinrichtung (12; 35) angeordnet ist, dadurch gekennzeichnet, dass die mindestens eine Transporteinrichtung (12; 35) auf jeden der in den angrenzenden Kanälen (8; 33) angeordneten Lagerplätze (7) jederzeit Zugriff hat, und dass die Transporteinrichtungen (12; 35), die Transportmittel (26; 43) und die Zu- und Wegführvorrichtungen (11; 45) jederzeit unabhängig voneinander und autonom antreibbar und verfahrbar sind.

2. Hochleistungs-Blocklager nach Anspruch 1, dadurch gekennzeichnet, dass das Transportmittel, mit welchem ein Lagerstückgut (2; 34) entlang der Gasse (9; 40) verfahrbar ist, aus einem Wagen (26; 43) besteht, welcher in längs der Gasse (9; 40) angeordneten Schienen (10; 41) hin- und herbewegbar ist.

3. Hochleistungs-Blocklager nach einem der Ansprüche 1 oder 2, dadurch gekennzeichnet, dass die Kanäle (8) unmittelbar nebeneinander angeordnet sind und über jedem Kanal (8) eine Fahrbahn angeordnet ist, und dass die Transporteinrichtung als eine längs dieser Fahrbahn verfahrbare Verfahr- und Hubvorrichtung (12) ausgebildet ist, mit welcher ein Lagerstückgut (2) anhebbar ist und über die im Kanal (8) gelagerten anderen Lagerstückgüter (2) verfahrbar ist.

4. Hochleistungs-Blocklager nach Anspruch 3, dadurch gekennzeichnet, dass pro Lagerebene (3) eine Gasse (9) vorgesehen ist, welche an einem Ende der Gesamtlänge der Kanäle (8) angeordnet ist, und dass jede Fahrbahn aus Schienen besteht, entlang welchen die Verfahr- und Hubvorrichtung (12) verfahrbar ist, und welche sich über die Gesamtlänge jedes Kanals (8) und über die Gasse (9) erstrecken.

5. Hochleistungs-Blocklager nach einem der Ansprüche 3 oder 4, dadurch gekennzeichnet, dass an jeder Ecke eines Lagerplatzes (7) für ein Lagerstückgut (2) eine vertikale Lagerstütze (6) angeordnet ist, an welche in jeder Lagerebene (3) beidseits eines Kanals (8) und längs dazu verlaufende horizontale Längsprofile (4) befestigt sind, welche aus einem C-Profil bestehen, deren Schenkel jeweils gegen die Mitte des Kanals (8) gerichtet sind und die als Fahrschienen für die den in der darunterliegenden Lagerebene (3) angeordneten Kanal (8) bedienende Verfahr- und Hubvorrichtung (12) vorgesehen sind, und dass zu den Längsprofilen (4) parallel dazu horizontal verlaufende Auflagerprofile (5) auf die Lagerstützen (6) verbindenden Querstreben angeordnet sind, auf welchen die Lagerstückgüter (2) abstellbar sind.

6. Hochleistungs-Blocklager nach einem der Ansprüche 3 bis 5, dadurch gekennzeichnet, dass jedes Lagerstückgut (2) mit einem einheitliche Abmessungen aufweisenden, im wesentlichen plattenförmigen Bodenstück (16) versehen ist und dass die Verfahr- und Hubvorrichtung (12) mit vier absenkbaren und anhebbaren im wesentlichen vertikal angeordneten Armen (15) ausgerüstet ist, welche Arme (15) an ihren unteren Enden eine horizontale Abwinkelung (19) aufweisen, und welche Arme (15) so angeordnet sind, dass sie je an einem längsseitigem Ende eines Lagerstückgutes (2) mit der horizontalen Abwinkelung (19) im Bodenstück (16) einführbar sind.

7. Hochleistungs-Blocklager nach Anspruch 6, dadurch gekennzeichnet, dass die Arme (15) mit der Verfahr- und Hubvorrichtung (12) um je eine Achse schwenkbar verbunden sind, welche Achse parallel zu den Längsseiten des Lagerstückgutes (2) angeordnet ist.

8. Hochleistungs-Blocklager nach Anspruch 6, dadurch gekennzeichnet, dass die Arme (15) der Verfahr- und Hubvorrichtung (12) so in der Verfahr- und Hubvorrichtung (12) gehalten sind, dass sie nur entlang einer Richtung bewegbar und somit anhebbar und absenkbar sind.

9. Hochleistungs-Blocklager nach einem der Ansprüche 1 oder 2, dadurch gekennzeichnet, dass jeweils eine Fahrbahn (32) zwischen zwei Kanälen (33), in welchen die Lagerstückgüter (34) lagerbar sind, im wesentlichen auf demselben Niveau angeordnet ist, dass die in jeder Fahrbahn (32) vorgesehene Transporteinrichtung (35) aus einem Fahrzeug besteht, mit welchem die Lagerstückgüter (34) quer zum entsprechenden Kanal (33) vom Lagerplatz entnehmbar bzw. in diesen einbringbar sind.

10. Hochleistungs-Blocklager nach Anspruch 9, dadurch gekennzeichnet, dass in jedem Kanal (33) der der Gasse (40) benachbarte erste Lagerplatz als Umladeplatz (44) gestaltet ist, auf welchen ein Lagerstückgut (34) durch das Fahrzeug (35) aufsetzbar bzw. davon entnehmbar ist, und von welchem ein darauf sich befindendes Lagerstückgut (34) vom Transportmittel (43) der Gasse abnehmbar ist bzw. darauf bringbar ist.

11. Hochleistungs-Blocklager nach einem der Ansprüche 9 oder 10, dadurch gekennzeichnet, dass die Lagerplätze von jedem Kanal (33) durch längs des entsprechenden Kanals (33) verlaufende Längsprofile (37, 38) gebildet sind, welche durch vertikal angeordnete, quer zu den Kanälen (33) stehende Ständerrahmen (39) gehalten sind, und dass das an eine Fahrbahn angrenzende Längsprofil (38) von jedem Kanal (33) als eine der beiden Schienen für die Fahrbahn ausgebildet ist.

12. Hochleistungs-Blocklager nach einem der Ansprüche 9 bis 11, dadurch gekennzeichnet, dass jedes Fahrzeug (35) mit einer quer zum Kanal (33) auf beide Seiten ausfahrbaren, anheb-und absenkbaren Gabel (36) ausgestattet ist, dass jeder Wagen (43) der Gassen (40) mit einer quer zur entsprechenden Gasse (40) seitlich ausfahrbaren anheb- und absenkbaren Gabel (47) ausgestattet ist, und dass die Lagerstückgüter (34) je eine den Boden bildende Palette (46) aufweisen, in welche die Gabeln (36) und (47) einfahrbar sind.

13. Hochleistungs-Blocklager nach einem der Ansprüche 10 bis 12, dadurch gekennzeichnet, dass die Umladeplätze (44) mit einem Drehmechanismus ausgestattet sind, mittels welchem das darauf stehende Lagerstückgut (34) um eine vertikale Achse um 90° drehbar ist.

## Claims

1. High-performance warehouse with storing and retrieving means for goods comprising several horizontal storage levels disposed over each other, of which each is made of channels running parallel to each other in which the individual goods can be stored in a row one behind the other on corresponding storage spaces, and of which each storage level is provided with at least one lane which runs essentially perpendicular to the channels and in which transport means are disposed which cooperate with a delivering and removal device to serve the individual storage levels, and each channel (8; 33) adjoins a drivable way (4; 32) running parallel thereto, in which is disposed at least one independent transport device (12; 35) driveable along this drivable way (4; 32) characterized in that the at least one transport device (12; 35) has access at all times to each of the storage spaces (7) disposed in the adjacent channels (8; 33) and that the transport devices (12; 35), the transport means (26; 43) and the delivering and removal devices (11; 45) can be driven and run independently of one another and autonomously at all times.

2. High-performance warehouse according to claim 1, characterized in that the transport means with which a storage unit load (2; 34) can be driven along the lane (9; 40) consists of a waggon (26; 43) which can be moved back and forth on rails (10; 41) disposed along the lane (9; 40).

3. High-performance warehouse according to one of the claims 1 or 2, characterized in that the channels (8) are disposed immediately next to one another and a drivable way is disposed above each channel (8) and that the transport device is designed as a travelling and lifting device (12) with which a storage unit load (2) can be lifted and can be moved over the other storage unit loads (2) stored in the channel (8).

4. High-performance warehouse according to claim 3, characterized in that one lane (9) is provided per storage level (3) which lane is disposed at one end of the total length of the channels (8), and that each drivable way consists of rails along which the travelling and lifting device (12) is drivable, and which extend over the entire length of each channel (8) and over the lane (9).

5. High-performance warehouse according to one of the claims 3 or 4, characterized in that a vertical support (6) is disposed at each corner of a storage space (7) for a storage unit load (2), to which horizontal sections (4) are attached on each storage level (3) on both sides of a channel (8) and running longitudinally thereto, which longitudinal sections consist of a C-profile section whose arms in each case are directed toward the middle of the channel (8) and which are foreseen as running rails for the travelling and lifting device (12) serving the channel (8) disposed in the underlying warehouse level (3), and that disposed parallel to the longitudinal sections (4) are bearing sections (5) running horizontally on the cross struts connecting the vertical supports (6), on which cross struts the storage unit loads (2) can be put down.

6. High-performance warehouse according to one of the claims 3 to 5, characterized in that each storage unit load (2) is provided with an essentially plate-shaped base plate (16) having uniform dimensions and that the travelling and lifting device (12) is provided with four lowerable and liftable arms (15) disposed essentially vertical, which arms (15) have a horizontal bend (19) at their lower ends and which arms (15) are each disposed in such a way that they can be introduced with the horizontal bend (19) into the base plate (16) at an area along the length of a storage unit load (2).

7. High-performance warehouse according to claim 6, characterized in that the arms (15) are connected to the travelling and lifting device (12) pivotably about an axis in each case, which axis is disposed parallel to the lengths of the storage unit load (2).

8. High-performance warehouse according to one of the claim 6, characterized in that the arms (15) of the travelling and lifting device (12) are held in the travelling and lifting device (12) in such a way that they are movable only in one direction and are thus liftable and lowerable.

9. High-performance warehouse according to one of the claims 1 or 2, characterized in that in each case a drivable way (32) is disposed between two channels (33), in which the storage unit loads (34) can be stored, essentially at the same level, that the transport device (35) provided in each drivable way (32) consists of a vehicle with which the storage unit loads (34) can be retrieved from the storage space transversely to the corresponding channel (33), or respectively be delivered thereto.

10. High-performance warehouse according to one of the claim 9, characterized in that in each channel (33) of the first storage space adjacent to the lane (40) is designed as the transfer space (44), on which a storage unit load (34) can be placed by the vehicle (35) or respectively from which it can be retrieved, and from which a storage unit load (34) located thereon can be taken off the transport means (43) of the lane or placed on.

11. High-performance warehouse according to one of the claims 9 or 10, characterized in that the storage spaces of each channel (33) are formed by longitudinal sections (37, 38) which are held by vertically disposed supporting frames (39) running transversely to the channels (33), and that the longitudinal section (38) adjoining a drivable way of each channel (33) is designed as one of the two rails for the drivable way.

12. High-performance warehouse according to one of the claims 9 to 11, characterized in that each vehicle (35) is provided with a liftable and lowerable fork (36) extendible on both sides, transversely to the channel (33), that each waggon (43) of the lane (40) is provided with a liftable and lowerable fork (47), laterally extendible transversely to the corresponding lane (40), and that the storage unit loads (34) each have a pallet (46) forming the floor into which the forks (36) and (47) can be inserted.

13. High-performance warehouse according to one of the claims 10 to 12, characterized in that the transfer place (44) is provided with a rotating mechanism by means of which the storage unit load (34) situated thereon is rotatable by 90° about a vertical axis.

## Revendications

1. Magasin à hautes performances, doté de moyens pour stocker et prélever des marchandises, comprenant plusieurs niveaux d'entreposage horizontaux, disposés l'un au-dessus de l'autre, dont chacun est constitué de canaux placés parallèlement les uns par rapport aux autres, dans lesquels les différentes marchandises sont stockables les unes derrière les autres sur des emplacements de stockage correspondants et dont chaque niveau d'entreposage est pourvu au minimum d'une allée, qui, pour l'essentiel, est placée perpendiculairement aux canaux et dans laquelle sont disposés des moyens de transport agissant de façon combinée avec un dispositif d'amenage et d'évacuation pour la desserte des différents plans d'entreposage, chaque canal (8;33) étant contigu à une piste (4; 32) parallèle, dans laquelle est disposé le long de cette piste (4; 32) au minimum un dispositif de transport autonome (12; 35) mobile, caractérisé en ce qu'au minimum un dispositif de transport (12; 35) a accès à tout moment à chacun des emplacements d'entreposage (7) disposés dans les canaux contigus (8; 33) et en ce que les dispositifs de transport (12; 35), les moyens de transport (26; 43) et les dispositifs d'amenage et d'évacuation (11; 45) sont entraînables et déplaçables de façon autonome et indépendante l'un de l'autre à tout moment.

2. Magasin à hautes performances selon la revendication 1, caractérisé en ce que le moyen de transport au moyen duquel une marchandise entreposée (2; 34) est déplaçable le long de l'allée (9; 40) est constitué d'un chariot (26; 43), déplaçable dans un sens et l'autre dans des rails (10; 41) disposés le long de l'allée (9; 40).

3. Magasin à hautes performances selon l'une des revendications 1 ou 2, caractérisé en ce que les canaux (8) sont placés directement côte à côte et qu'une piste est disposée au-dessus de chaque canal (8) et en ce que le dispositif de transport est constitué sous la forme d'un dispositif de transfert et de levage (12) mobile le long de cette piste, au moyen duquel une marchandise (2) peut être levée et transférée au-dessus des autres marchandises (2) stockées dans le canal (8).

4. Magasin à hautes performances selon la revendication 3, caractérisé en ce qu'une allée est prévue (9) par niveau d'entreposage (3), laquelle est disposée à une extrémité de la longueur totale des canaux (8) et en ce que chaque piste est constituée de rails le long desquels peut se déplacer le dispositif de transfert et de levage (12) et qui s'étend sur la totalité de la longueur de chaque canal (8) et au-dessus de l'allée (9).

5. Magasin à hautes performances selon l'une des revendications 3 ou 4, caractérisé en ce qu'à chaque angle d'un emplacement d'entreposage (7) est disposé un support d'appui vertical (6) d'une marchandise (2), sur lequel sont fixés dans chaque plan d'entreposage (3) des deux côtés d'un canal (8) et le long de celui-ci des profilés longitudinaux (4) de direction horizontale, constitués d'un profilé en C dont les ailes sont respectivement orientées vers le centre du canal (8) et qui sont prévus comme rails de circulation pour le dispositif de transfert et de levage (12) desservant le canal (8) disposé dans le plan d'entreposage (3) situé en dessous et en ce que les profilés d'appui (5) orientés horizontalement parallèlement aux profilés longitudinaux (4) sont disposés sur les traverses reliant les support d'appui (6), sur les quelles les marchandises (2) peuvent être déposées.

6. Magasin à hautes performances selon l'une des revendications 3 à 5, caractérisé en ce que chaque marchandise (2) est pourvue d'un fond (16), essentiellement sous forme de plateau, présentant des dimensions standards et en ce que le dispositif de transfert et de levage (12) est équipé de quatre bras (15) disposés pour l'essentiel verticalement, abaissables et relevables, lesquels bras (15) présentent à leur extrémité inférieure un coude (19) horizontal et sont disposés de manière à pouvoir être introduits dans le fond (16) avec le coude horizontal (19) respectivement sur une extrémité côté longitudinal d'une marchandise (2).

7. Magasin à hautes performances selon la revendication 6, caractérisé en ce que les bras (15) sont reliés au dispositif de transfert et levage(12) autour de respectivement un axe orientable, lequel axe est disposé parallèlement aux côtés longitudinaux de la marchandise (2).

8. Magasin à hautes performances selon la revendication 6, caractérisé en ce que les bras (15) du dispositif de transfert et levage (12) sont maintenus dans celui-ci (12), de manière qu'ils ne soient mobiles et en conséquence abaissables et relevables que dans une direction.

9. Magasin à hautes performances selon l'une des revendications 1 ou 2, caractérisé en ce que respectivement une piste (32) est, pour l'essentiel, disposée au même niveau entre deux canaux (33), dans lesquels les marchandises (34) sont stockables, en ce que le dispositif de transport (35) prévu dans chaque piste (32) est constitué d'un véhicule dans lequel les marchandises (34) peuvent être enlevées de l'emplacement d'entreposage ou placées dans celui-ci transversalement au canal correspondant (33).

10. Magasin à hautes performances selon la revendication 9, caractérisé en ce que dans chaque canal (33) le premier emplacement d'entreposage contigu de l'allée (40) est constitué sous la forme d'un emplacement de transbordement (44) sur lequel une marchandise (34) peut être disposée ou enlevée par le véhicule (35) et à partir duquel une marchandise (34) se trouvant sous cet emplacement de transbordement peut être enlevée ou placée sur celui-ci par le moyen de transport (43) de l'allée.

11. Magasin à hautes performances selon l'une des revendications 9 ou 10, caractérisé en ce que les emplacements d'entreposage de chaque canal (33) sont constitués par des profilés longitudinaux (37, 39) placés longitudinalement au canal correspondant (33), lesquels profilés sont maintenus par des cadres-supports (39) placés verticalement, disposés transversalement aux canaux (33) et en ce qu'un profilé longitudinal (38) de chaque canal (33) contigu à une piste est constitué sous la forme d'un des deux rails de la piste.

12. Magasin à hautes performances selon l'une des revendications 9 à 11, caractérisé en ce que chaque véhicule (35) est doté d'une fourche (36) abaissable et relevable pouvant sortir transversalement au canal (33) sur les deux côtés, en ce que chaque chariot (43) de l'allée (40) est équipé d'une fourche (47) abaissable et relevable pouvant sortir latéralement, transversalement à l'allée correspondante (40) et en ce que les marchandises entreposées (34) présentent respectivement une palette (46) constituant le fond, dans laquelle les fourches (36) et (37) peuvent rentrer.

13. Magasin à hautes performances selon l'une des revendications 10 à 12, caractérisé en ce que les emplacements de transbordement (44) sont équipés d'un mécanisme de pivotement, au moyen duquel la marchandise entreposée (44) placée dessus peut pivoter de 90° autour d'un axe vertical.
